# EUROPEAN PATENT APPLICATION

(11) **EP 1 447 382 A1**
(43) Date of publication of application: **18.08.2004**
(21) Application number: 03425086.0
(22) Date of filing: 12.02.2003
(51) Int. Cl.: C02F 1/42, C02F 1/00, G01R 27/26, G01N 27/22, B01J 49/00

(54) **Method for measuring the efficiency of water-softeners and the like, as well as water-softener which carries out said method**

(71) Applicant: Bonferraro S.p.A., 37060 Bonferraro (VR) (IT)
(72) Inventor: Righetti, Marco, 46032 Castelbelforte MN (IT); Bissoli, Attilio, 37057 Raldon di San Giovanni Lupatoto VR (IT)
(74) Representative: Pizzoli, Antonio

(57) **Abstract**

Method for measuring the efficiency of resins (2) contained in water-softeners and the like (1, 3, 4), which comprises the following operative steps:
- arranging the plates (12, 12'; 25, 26) of a capacitor (13) around or inside a container (1) for the resins (2), so that the latter acts as a dielectric;
- measuring the capacitance (C) of this capacitor (13);
- determining the efficiency of the resins (2) according to the measured capacitance (C).
The present invention also relates to a water-softener which carries out such a method.

## Description

The present invention relates to a method for measuring the efficiency of water-softeners and the like, and in particular to a method which allows to measure the efficiency of a water-softener employing ion exchange resins. The present invention also relates to a water-softener which carries out such a method.

The water-softeners are generally employed in apparatuses, as for example the dishwashers, which for their correct working need water with a low hardness, in particular lower than 5° dF (French degrees: 1° dF = 10 milligrams/liter). As a matter of fact, salts in the form of calcium and magnesium bicarbonates, which constitute the hardness factors, are dissolved in the water coming from the water network. These salts have the property, at temperatures greater than 60° C, of precipitating and transforming into carbonates which, being insoluble, settle in the hydraulic circuit, with consequent reduction of the apparatus performances.

The function of the water-softener is to decalcify the water through an ion exchange which occurs during the flow of the water in the resins, where the calcium and magnesium salts are retained thanks to the reaction with the sodium and potassium ions present in the same resins. During the water flow, the resins progressively loose their capacity of lowering the level of salts dissolved in the water, so that they must be periodically regenerated with a suitable system employing common salt (NaCl) contained in a suitable separate container.

In the known water-softeners, the regeneration is carried out after one or more working cycles of the domestic appliance, so that the user must know the water hardness of the water network. This information is not always easily available and the incorrect adjustment of the decalcification system may cause malfunctions (salt quantity too low or regeneration too rare) or excessive salt consumptions (salt quantity too high or regeneration too frequent).

The known devices for measuring the resin efficiency are based on a measurement of their conductivity by means of a plurality of electrodes inserted into the resins themselves. These known devices have the following disadvantages:
1) the exhaustion of the resins inside their container is not uniform nor homogeneous during the time, so that a high number of electrodes is needed for covering the whole volume of the resins, with consequent structural complexity and relevant high costs.
2) the electrodes, being inserted into a highly corrosive environment, must be made of a suitable material, which further increases the costs.

It is therefore an object of the present invention to provide a method and a water-softener which are free from said disadvantages, i.e. which are simple, reliable and cheap. Another object of the present invention is to provide a water-softener which allows to automatically regenerate the resins only when this is necessary, so as to optimize the salt consumptions and reduce the environmental impact. Said objects are achieved with a method and a water-softener, the main features of which are specified in claims 1 and 9, respectively, while other features are specified in the remaining claims.

The method and the water-softener according to the present invention are based on the measurement of the electric permittivity or dielectric constant of the resins and on the conversion of this permittivity, by means of a control device, into a magnitude, for instance a voltage or a frequency, which depends on the concentration of the ions present in the resins. As a matter of fact, as described above, during the water flow the resins loose the sodium ions which are restored only after the regeneration.

Thanks to the present invention, it is not only unnecessary a direct contact with the resins for measuring their efficiency, but this measurement can also be obtained in a simple and precise manner, despite the exhaustion differences of the resin in their container.

The water-softener according to the present invention therefore allows to automatically control the carrying out of the periodic regeneration, thereby obtaining a use simplification for the user, besides an optimization of the salt consumptions and a lower environmental impact.

Further advantages and features of the method and of the water-softener according to the present invention will become clear to those skilled in the art from the following detailed and non-limiting description of some embodiments thereof with reference to the attached drawings wherein:
- figure 1 shows a scheme of the water-softener according to a first embodiment of the invention;
- figure 2 shows a perspective view of the water-softener of figure 1;
- figure 3 shows a perspective exploded view of the water-softener of figure 1;
- figure 4 shows an electric scheme of the water-softener of figure 1;
- figure 5 shows an experimental diagram of the water-softener of figure 1;
- figure 6 shows an electric scheme of the water-softener according to a second embodiment of the invention;
- figure 7 shows a top view of the water-softener according to a third embodiment of the invention; and
- figure 8 shows a cross-sectioned view along plane VIII-VIII of the water-softener of figure 7.

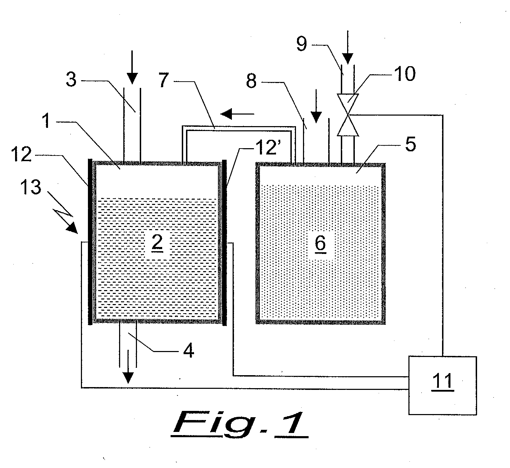

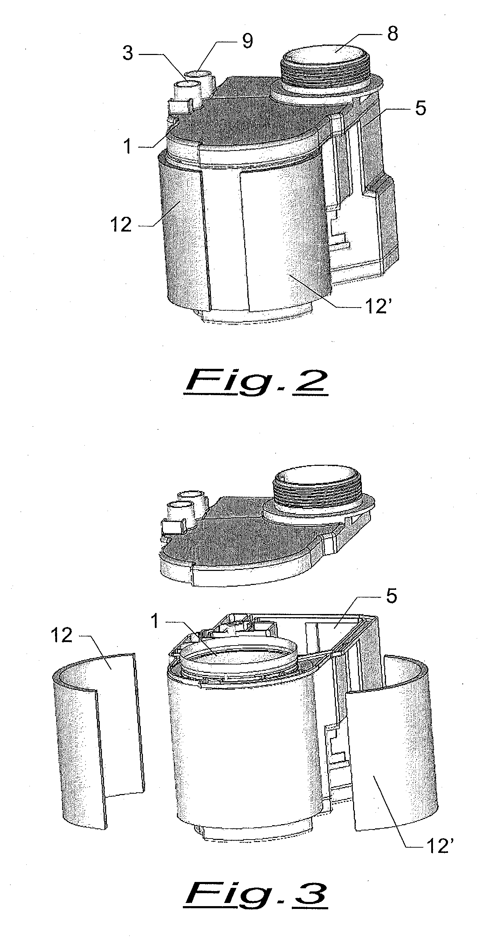

Referring to figures 1 to 3, it is seen that the water-softener according to the first embodiment of the present invention, for example arranged into a dishwasher connected to the water network, comprises in a known way a container 1 for the resins 2, which has a substantially cylindrical shape and is connected to the outside by means of at least one inlet duct 3 for the water to be decalcified and one outlet duct 4 for the water decalcified by resins 2. The latter have the property of being ion exchangers and are initially bound with sodium ions Na⁺. When the water containing calcium and magnesium bicarbonates flows from duct 3 into container 1, a chemical exchange reaction occurs and the sodium ion bounds itself with the group HCO₃⁻, thereby forming sodium bicarbonate NaHCO₃ which, dissolved in the water, flows out from duct 4, while the calcium and magnesium ions bind themselves with the R⁻ ion of resins 2 and precipitate in container 1.

The water-softener comprises always in a known way a container 5 for salt 6, connected to container 1 through at least one connection duct 7. In the present embodiment of the invention, containers 1 and 5 are made of a single piece of plastic material and are mutually connected by an opening which is obtained between the two containers and acts as the connection duct 7. Container 5 comprises an opening 8 for introducing salt 6 and an inlet duct 9 for the regeneration water. The inlet duct 9 is provided with an electric valve 10 which controls the inlet of water into container 5. For regenerating resins 2, an electric and/or electronic device 11 opens the electric valve 10, thereby admitting water slowly into container 5. This water, enriched by salt 6 contained in container 5, flows through the connection duct 7 into container 1, where a double exchange chemical reaction occurs. In this reaction the sodium ion substitutes the calcium and magnesium ions in the bond with resins 2, while calcium and magnesium chlorides, which remain suspended in container 1 until they are expelled at the first working cycle after the regeneration, are generated.

According to the invention, at least one pair of conductive plates 12, 12' are arranged around or inside container 1 of resins 2. For example, container 1 has a substantially cylindrical shape, while plates 12, 12' are curved, in particular almost half-cylindrical, and are fixed onto the outer surface of container 1 so as to surround the greater volume possible of container 1 for compensating the exhaustion differences of resins 2. The conductive plates 12, 12', which are electrically insulated with each other, act therefore as the plates of a capacitor 13 having as dielectric the walls of container 1 and resins 2. The conductive plates 12, 12' are connected to an electric and/or electronic control device, in particular the same control device 11, which measures the capacitance C of capacitor 13 and supplies a signal variable according to the measured capacitance C. As a matter of fact, it has been found that the permittivity of resins 2 notably varies with the drop of the sodium ions due to the decalcification of the water flowing through resins 2.

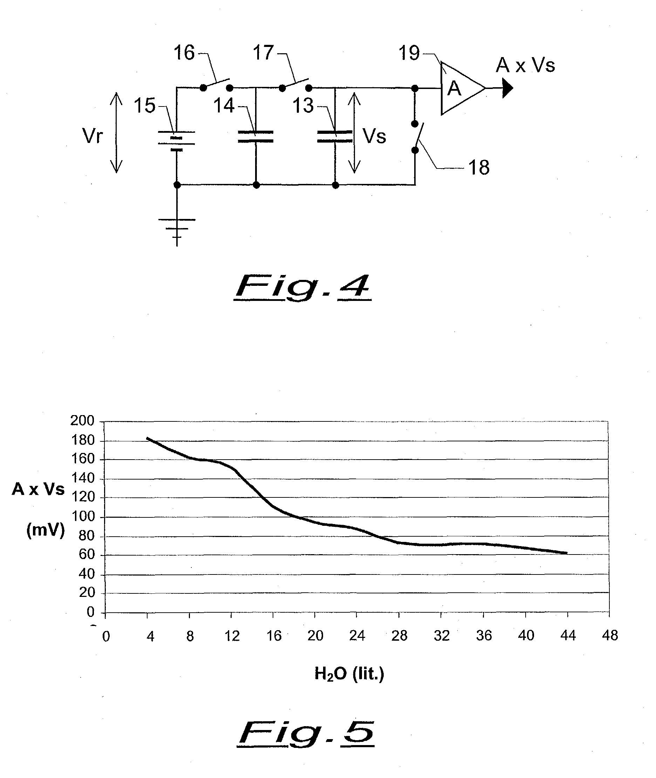

Referring now to figure 4, it is seen that the control device 11 can comprise a charge transfer sensor, for example a Q-PROX^{TM} device of the firm Quantum. In the present embodiment of the invention, this sensor comprises a reference capacitor 14 which has a known and constant capacitance Cr and is connected in parallel to capacitor 13 as well as to a reference voltage generator 15 which supplies a known and constant voltage Vr at the ends of capacitors 13 and 14. The voltage generator 15 can be separated by capacitor 13 by means of a first switch 16, while capacitors 13 and 14 can be separated one from the other by means of a second switch 17, as well as short-circuited by a third switch 18. Capacitors 13 and 14, apart from being connected in parallel one to the other, are also connected in series between the earth and an amplifier 19.

Through series of electric pulses controlling the opening and closing of switches 16, 17 and 18 it thus is possible to obtain a remarkable value of transferred charge, so as to significantly increase voltage Vs on capacitor 14. By measuring this value, amplified of a factor A by amplifier 19, it is possible to supply from the outside a voltage A x Vs proportional to the capacitance C of capacitor 13, that is depending on the exhaustion level of resins 2.

Figure 5 shows an experimental diagram containing a graph of the real measure of the voltage A x Vs (expressed in millivolts) of a test in which a water quantity (expressed in liters) with a hardness equal to 40° dF flows through container 1 for being decalcified. As it can be noticed, the voltage A x Vs decreases in an almost linear manner according to the liters of decalcified water.

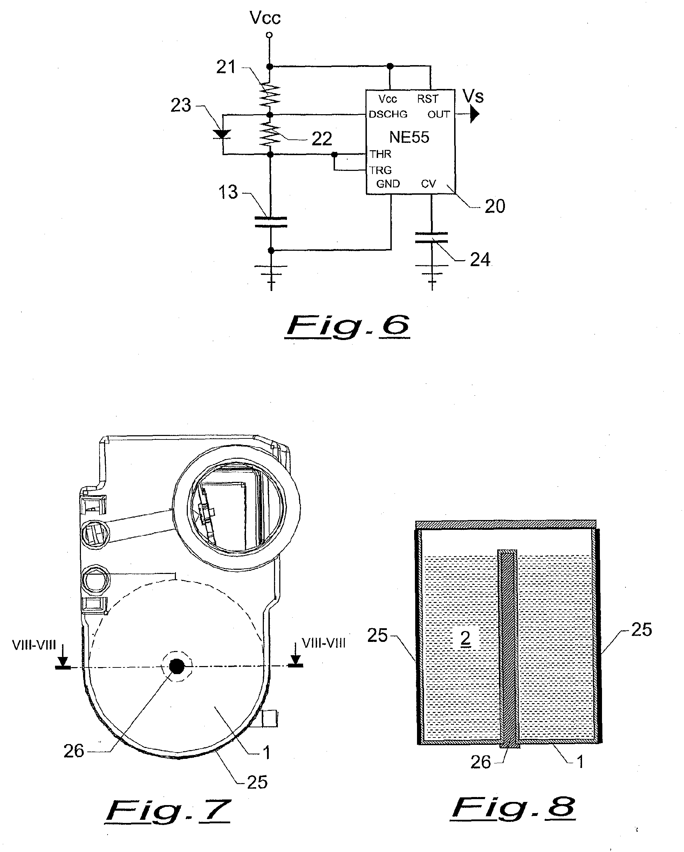

Referring to figure 6, it is seen that in a second embodiment of the invention the control device 11 can comprise, instead of the charge transfer sensor, an astable multivibrator, in particular a square wave generator, for measuring the capacitance C of capacitor 13. This astable multivibrator can in turn comprise an integrated circuit 20, for example a known NE555 integrated circuit, which is connected to a pair of resistors 21 and 22, in turn connected in series between a source of direct current Vcc and the capacitor 13 connected to earth. Once the resistances of the resistors 21 and 22 have been fixed, the frequency of the output signal Vs depends only on the value of the capacitance C of capacitor 13. The astable multivibrator can further comprise a diode 23 connected in parallel to resistor 22 to obtain a duty cycle of the square output wave of 50% when the resistances of resistors 21 and 22 are the same. The integrated circuit 20 can further be earthed through a capacitor 24 acting as a filter.

The frequency of the wave generated by the astable multivibrator is inversely proportional to a product RC, where R is a resistive component and C is a capacitive component depending on the used circuit. If the resistive component is kept constant, the variations of the capacitive components cause a variation of the frequency of the signal generated by the astable multivibrator. With this arrangement it is possible to carry out not a capacitance, but a frequency measurement, which can be elaborated more easily by low-cost commercial microprocessors, especially if the generated signal is a square wave.

A measurement of the voltage or the frequency of the output signal Vs carried out at the end of each working cycle can thus give information about the exhaustion state of the resins, i.e. about their efficiency in decalcifying water and therefore about the need of executing a regeneration phase. For this purpose, the control device 11 can send a control signal for opening the electric valve 10 when signal Vs drops under a determined threshold level which shows the need of regenerating resins 2. With this arrangement, the regeneration of resins 2 occurs in a completely automatic manner.

Finally, referring to figures 7 and 8, it is seen that in a third embodiment of the invention the plates of capacitor 13 are made up of a conductive curved plate 25 which surrounds almost completely the outer surface of container 1 and of a conductive cylinder 26 inserted from the bottom into a seat arranged in the middle of container 1. Therefore, plate 25, cylinder 26, container 1 and resins 2 substantially work as a capacitor with coaxial plates.

## Claims

1. Method for measuring the efficiency of resins (2) contained in water-softeners and the like (1, 3, 4), **characterized in that** it comprises the following operative steps:
- arranging the plates (12, 12'; 25, 26) of a capacitor (13) around or inside a container (1) for the resins (2), so that the latter acts as a dielectric;
- measuring the capacitance (C) of this capacitor (13);
- determining the efficiency of the resins (2) according to the measured capacitance (C).

2. Method according to the previous claim, **characterized in that** the container (1) for the resins (2) is substantially cylindrical and the plates (12, 12'; 25, 26) of the capacitor (13) comprise a pair of conductive curved plates (12, 12') arranged around the outer surface of the container (1).

3. Method according to the claim 1, **characterized in that** the container (1) for the resins (2) is substantially cylindrical and the plates (12, 12'; 25, 26) of the capacitor (13) comprise a conductive curved plate (25) arranged around the outer surface of the container (1), as well as a conductive cylinder (26) inserted into a seat arranged in the middle of container (1), so that the plate (25), the cylinder (26), the container (1) and the resins (2) substantially work as a capacitor with coaxial plates.

4. Method according to one of the previous claims, **characterized in that** the plates (12, 12': 25, 26) of the capacitor (13) are connected to an electric and/or electronic control device (11), which measures the capacitance (C) of the capacitor (13) and supplies a control signal (Vs) according to the measured capacitance (C).

5. Method according to claim 4, **characterized in that** the control device (11) comprises a charge transfer sensor (14, 15, 19).

6. Method according to claim 4 or 5, **characterized in that** the voltage of the control signal (Vs) varies according to the capacitance (C) of the capacitor (13).

7. Method according to claim 4, **characterized in that** the control device (11) comprises an astable multivibrator (20, 21, 22).

8. Method according to claim 4 or 7, **characterized in that** the frequency of the control signal (Vs) varies according to the capacitance (C) of capacitor (13).

9. Water-softener comprising a container (1) for the resins (2), which is provided with at least one inlet duct (3) for the water to be decalcified and one outlet duct (4) for the water decalcified by the resins (2), **characterized in that** the plates (12, 12'; 25, 26) of a capacitor (13) are arranged around or inside the container (1) for the resins (2), so that the latter act as a dielectric, said capacitor (13) being connected to an electric and/or electronic device (11) suitable for measuring the capacitance (C) of the capacitor (13) and determining the efficiency of the resins (2) according to the measured capacitance (C).

10. Water-softener according to claim 9, **characterized in that** the container (1) for the resins (2) is connected to a container (5) for the salt (6) provided with an inlet duct (9) for the regenerating water, which is in turn connected to an electric valve (10) suitable for being controlled by said control device (11) according to the capacitance (C) measured by the capacitor (13).

11. Water-softener according to claim 9 or 10, **characterized in that** the container (1) for the resins (2) is substantially cylindrical and the plates (12, 12'; 25, 26) of the capacitor (13) comprise a pair of conductive curved plates (12, 12') arranged around the outer surface of the container (1).

12. Water-softener according to claim 9 or 10, **characterized in that** the container (1) for the resins (2) is substantially cylindrical and the plates (12, 12'; 25, 26) of the capacitor (13) comprise a conductive curved plate (25) arranged around the outer surface of the container (1), as well as a conductive cylinder (26) inserted into a seat arranged in the middle of container (1), so that the plate (25), the cylinder (26), the container (1) and the resins (2) substantially work as a capacitor with coaxial plates.

13. Water-softener according to one of claims 9 to 12, **characterized in that** the control device (11) supplies a control signal (Vs) according to the measured capacitance (C).

14. Water-softener according to one of claims 9 to 13, **characterized in that** the control device (11) comprises a charge transfer sensor (14, 15, 19).

15. Water-softener according to claim 13 or 14, **characterized in that** the voltage of the control signal (Vs) varies according to the capacitance (C) of the capacitor (13).

16. Water-softener according to claim 14 or 15, **characterized in that** the charge transfer sensor (14, 15, 19) comprises a reference capacitor (14) having a known and constant capacitance (Cr) and is connected in parallel to said first capacitor (13), as well as to a reference voltage generator (15) which supplies a known and constant voltage (Vr) to the ends of these capacitors (13, 14).

17. Water-softener according to claim 16, **characterized in that** the voltage generator (15) can be separated from the first capacitor (13) by means of a first switch (16), while both capacitors (13, 14) can be separated one from the other by a second switch (17), as well as short-circuited by a third switch (18), so that through series of electric pulses, which control the opening and the closing of switches (16, 17, 18) a remarkable value of transferred charge can be obtained, such to significantly increase the voltage (Vs) on the reference capacitor (14).

18. Water-softener according to claim 16 or 17, **characterized in that** both capacitors (13, 14), apart from being connected in parallel one to the other, are also connected in series between the earth and an amplifier (19).

19. Water-softener according to one of claims 14 to 18, **characterized in that** the charge transfer sensor comprises a Q-PROX^{TM} device of the firm Quantum.

20. Water-softener according to one of claims 9 to 13, **characterized in that** the control device (11) comprises an astable multivibrator (20, 21, 22).

21. Water-softener according to claim 13 or 20, **characterized in that** the frequency of the control signal (Vs) varies according to the capacitance (C) of the capacitor (13).

22. Water-softener according to claim 20 or 21, **characterized in that** the astable multivibrator (20, 21, 22) comprises an integrated circuit (20) connected to a pair of resistors (21, 22), in turn connected in series between a source of direct current (Vcc) and the capacitor (13) connected in series to earth.

23. Water-softener according to claim 22, **characterized in that** the integrated circuit (20) is a NE555 integrated circuit.

24. Water-softener according to claim 22 or 23, **characterized in that** the astable multivibrator (20, 21, 22) comprises a diode (23) connected in parallel to one (22) of the two resistors (21, 22).
